(19) **Europäisches Patentamt / European Patent Office / Office européen des brevets**

(11) **EP 3 916 197 B1**

(12) **FASCICULE DE BREVET EUROPEEN**

(45) Date de publication et mention de la délivrance du brevet:
**31.07.2024   Bulletin 2024/31**

(21) Numéro de dépôt: **21173181.5**

(22) Date de dépôt: **11.05.2021**

(51) Classification Internationale des Brevets (IPC):
**E21B 43/16** [(2006.01)]     **E21B 43/20** [(2006.01)]

(52) Classification Coopérative des Brevets (CPC):
**E21B 43/16; E21B 43/20;** E21B 2200/20

(54) **PROCÉDÉ POUR LA RÉCUPÉRATION D'HYDROCARBURES D'UNE FORMATION SOUTERRAINE PAR INJECTION D'UNE SOLUTION AQUEUSE SALINE COMPORTANT UN TENSIO-ACTIF**

VERFAHREN ZUR RÜCKGEWINNUNG VON KOHLENWASSERSTOFFEN AUS EINER UNTERIRDISCHEN FORMATION DURCH EINSPRITZEN EINER WÄSSRIGEN SALZLÖSUNG, DIE EIN TENSID ENTHÄLT

METHOD FOR THE RECOVERY OF HYDROCARBONS FROM AN UNDERGROUND FORMATION BY INJECTION OF A SALINE AQUEOUS SOLUTION COMPRISING A SURFACE-ACTIVE AGENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.05.2020   FR 2005675**

(43) Date de publication de la demande:
**01.12.2021   Bulletin 2021/48**

(73) Titulaire: **IFP Energies nouvelles**
**92500 Rueil-Malmaison (FR)**

(72) Inventeurs:
• **MALINOUSKAYA, Iryna**
**92852 Rueil-Malmaison Cedex (FR)**
• **PREUX, Christophe**
**92852 Rueil-Malmaison Cedex (FR)**
• **MARTIN, Adeline**
**92852 Rueil-Malmaison Cedex (FR)**
• **DELBOS, Aline**
**92852 Rueil-Malmaison Cedex (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
• **LERAY SARAH ET AL: "Multi-objective assisted inversion of chemical EOR corefloods for improving the predictive capacity of numerical models", JOURNAL OF PETROLEUM SCIENCE AND ENGINEERING, ELSEVIER, AMSTERDAM, NL, vol. 146, 12 August 2016 (2016-08-12), pages 1101 - 1115, XP029735039, ISSN: 0920-4105, DOI: 10.1016/J.PETROL.2016.08.015**
• **KUMAR BIKKY: "Effect of Salinity on the Interfacial Tension of Model and Crude Oil Systems", 1 September 2012 (2012-09-01), pages 1 - 147, XP055774477, Retrieved from the Internet <URL:https://prism.ucalgary.ca/bitstream/11023 /195/2/ucalgary_2012_kumar_bikky.pdf> [retrieved on 20210210], DOI: 10.11575/PRISM/25807**

## Description

### Domaine technique

La présente invention concerne le domaine de la récupération d'hydrocarbures contenus dans une formation souterraine par injection d'une solution aqueuse saline comprenant un tensio-actif, en vue d'une exploitation des hydrocarbures de cette formation souterraine ou de sa dépollution par des hydrocarbures présents.

L'exploitation d'un réservoir pétrolier par récupération primaire consiste à extraire, via un puits dit de production, le pétrole présent du réservoir par l'effet de surpression régnant naturellement au sein du réservoir. Cette récupération primaire ne permet d'accéder qu'à une faible quantité du pétrole contenu dans le réservoir, de l'ordre de 10 à 15% tout au plus.

Pour permettre de poursuivre l'extraction du pétrole, des méthodes secondaires de production sont employées, quand la pression du réservoir devient insuffisante pour déplacer le pétrole encore en place. Notamment, on injecte un fluide (ré-injection de l'eau produite diluée ou non, injection d'eau de mer ou de rivière, ou encore injection de gaz, par exemple) au sein du réservoir hydrocarboné, en vue d'exercer au sein du réservoir une surpression propre à entraîner le pétrole vers le ou les puits de production. Une technique usuelle dans ce cadre est l'injection d'eau (désignée également par le terme anglais « waterflooding »), dans laquelle de grands volumes d'eau sont injectés sous pression dans le réservoir via des puits injecteurs. L'eau injectée entraîne une partie du pétrole qu'elle rencontre et le pousse vers un ou plusieurs puits producteurs. Les méthodes secondaires de production telles que l'injection d'eau ne permettent toutefois d'extraire qu'une partie relativement faible des hydrocarbures en place (typiquement de l'ordre de 30%). Ce balayage partiel est imputable notamment au piégeage de l'huile par les forces capillaires, aux différences de viscosité et de densité existant entre le fluide injecté et les hydrocarbures en place, ainsi qu'aux hétérogénéités à des échelles micro- ou macroscopiques (échelle des pores et aussi échelle du réservoir).

Pour essayer de récupérer le reste du pétrole, qui demeure dans les formations souterraines à l'issue de la mise en oeuvre des méthodes primaires et secondaires de production, il existe différentes techniques dites de récupération assistée (connue sous l'acronyme « EOR », correspondant à « *Enhanced Oil Recovery* »)*.* Parmi ces techniques, on peut citer des techniques s'apparentant à l'injection d'eau précitée, mais employant une eau comprenant des additifs tels que des tensio-actifs (aussi appelés surfactants).

En effet, de manière générale, la présence d'un tensio-actif entraine une modification de la tension interfaciale entre l'eau et l'huile, plus précisément une baisse de la tension interfaciale. Appliquée au domaine à la récupération assistée d'hydrocarbures, la tension interfaciale entre l'eau et l'huile ainsi réduite permet de « laver » la roche et donc de récupérer une partie du pétrole qui était resté en place. Par conséquent, l'injection d'une eau comprenant un tensio-actif est une alternative très pertinente à l'injection d'eau seule dans les réservoirs géologiques comprenant des hydrocarbures.

### Technique antérieure

Les documents suivants seront cités dans la suite de la description :

C. Preux, I. Malinouskaya, Q.L.Nguyen, E. Flauraud, and S. Ayache, Reservoir-Simulation Model with Surfactant Flooding Including Salinity and Thermal Effect, Using Laboratory Experiments, SPE Réservoir Characterisation and Simulation Conference and Exhibition, 17-19 September, Abu Dhabi, UAE, 2019.

C. Huh, Exxon production Research Company, Interfacial tensions and solubilizing ability of a microemulsion phase that coexists with oil and brine, 1979, 19p.

Vonnegut, B. Rotating bubble method for the détermination of surface and interfacial tensions. Rev. Sci. Instr. 1942, 13, 6 - 16.

WINSOR (P.). - Solvent properties of amphiphilic compounds. Butterworth Londres (1954).

Leray, S., Douarche, F., Tabary, R., Peysson, Y., Moreau, P., Preux, C. (2016). Multi-objective assisted inversion of chemical EOR corefloods for improving the prédictive capacity of numerical models. Journal of Petroleum Science and Engineering, 146, pp 1101-1115. https://doi.org/10.1016/j.petrol.2016.08.015

L'exploitation pétrolière d'un gisement consiste à déterminer les zones du gisement présentant le meilleur potentiel pétrolier, à définir des schémas de récupération des hydrocarbures pour ces zones (afin de définir le type de récupération, le nombre et les positions des puits d'exploitation permettant une récupération d'hydrocarbures optimale), à forer des puits d'exploitation et, de façon générale, à mettre en place les infrastructures de production nécessaires au développement du gisement.

Dans le cas d'une récupération assistée par injection d'une solution aqueuse saline comprenant au moins un tensio-actif, la définition d'un schéma de récupération des hydrocarbures contenus dans la formation. De manière générale, un schéma de récupération d'une formation souterraine peut nécessiter de simuler numériquement, de la façon la plus réaliste possible, les écoulements de cette solution aqueuse comprenant le tensio-actif dans la formation souterraine considérée. Une telle simulation est réalisée à l'aide d'un simulateur d'écoulement comprenant un modèle de déplacement de la solution aqueuse comprenant le tensio-actif, appelé aussi communément "modèle de déplacement du tensio-actif" ou "modèle de déplacement du surfactant".

De manière classique, le modèle de déplacement du tensio-actif repose sur l'hypothèse que l'eau additionnée de tensio-actif voit sa tension interfaciale diminuer. Ainsi, un simulateur d'écoulement, apte à la modélisation des écoulements d'une solution aqueuse saline comprenant au moins un tensio-actif dans une formation souterraine comprenant des hydrocarbures, intègre un modèle de l'évolution de la tension interfaciale entre l'eau (la solution aqueuse saline comportant un tensio-actif) et l'huile (les hydrocarbures).

Comme décrit dans le document (Preux et al., 2019), la tension interfaciale d'un système eau-huile-tensioactif est notamment fonction d'au moins un paramètre, tel que la salinité de la solution aqueuse saline, la concentration en tensio-actif, et/ou la température.

La construction d'un modèle d'évolution de la tension interfaciale consiste généralement à réaliser des mesures en laboratoire pour différentes valeurs des paramètres (par exemple pour différentes valeurs de salinité), et à chercher les constantes d'une expression analytique d'un modèle de l'évolution de la tension interfaciale en fonction de ce ou ces paramètres permettant que le modèle ainsi calibré ajuste au mieux les mesures réalisées.

Dans le cas de la dépendance de la tension interfaciale à la concentration en tensio-actif, qui est de comportement bien connu dans la littérature, il suffit de mesurer la tension interfaciale pour une ou deux valeurs de concentration, correspondant à des tensions interfaciales minimales. En effet, les courbes de détermination de la concentration micellaire critique (CMC) sont suffisamment connues pour permettre de n'avoir à déterminer que les points de la tension interfaciale à la CMC et de la tension interfaciale à l'infini.

Il en est de même pour la dépendance de la tension interfaciale à la température : pour calibrer les modèles communément utilisés à ce jour, il est suffisant de faire les mesures à la température de la formation souterraine et à la température à la surface de la formation souterraine.

En ce qui concerne la dépendance de l'évolution de la tension interfaciale à la salinité, les modèles actuels, connus dans la littérature, sont des modèles simplifiés. Par exemple, le document (Leray et al., 2016) décrit une corrélation de la tension interfaciale avec la salinité de forme symétrique par rapport à une valeur de salinité caractéristique, connue sous le terme de salinité optimale (cf. définition ci-dessous). Toutefois, une large gamme de tensio-actifs ne participe pas à une évolution symétrique de la tension interfaciale en fonction de la salinité, par rapport à la salinité optimale.

De plus, la tension interfaciale n'est généralement pas constante dans une formation souterraine et est différente de la tension interfaciale de l'eau d'injection. La détermination d'un modèle représentatif de l'évolution de la tension interfaciale en fonction de la salinité est donc complexe.

L'un des objets de l'invention est la détermination d'un modèle réaliste de l'évolution de la tension interfaciale en fonction de la salinité d'une solution aqueuse saline comportant au moins un tensio-actif injectée dans une formation souterraine comprenant des hydrocarbures.

En particulier, la présente invention fournit un procédé rigoureux pour effectuer la calibration des constantes intervenant dans une expression analytique d'un modèle de l'évolution de la tension interfaciale en fonction de la salinité. Cette méthodologie de calibration du modèle de tension interfaciale permet de plus de limiter le nombre d'expériences de laboratoire à réaliser.

De plus, le modèle selon l'invention est applicable à des tensio-actifs ayant un comportement non symétrique par rapport à la salinité optimale.

**Résumé de l'invention**

L'invention concerne un procédé pour la récupération des hydrocarbures contenus dans une formation souterraine par injection d'une solution aqueuse saline comportant au moins un tensio-actif, au moyen d'un simulateur numérique d'écoulement incorporant au moins un modèle de l'évolution de la tension interfaciale entre ladite solution aqueuse saline et lesdits hydrocarbures en fonction au moins de la salinité de ladite solution aqueuse saline comportant au moins ledit tensio-actif.

Le procédé selon l'invention comprend au moins les étapes suivantes :

A) on calibre ledit modèle de l'évolution de la dite tension interfaciale entre ladite solution aqueuse saline et lesdits hydrocarbures en fonction de ladite salinité de la manière suivante :

a) on détermine une valeur de salinité optimale de ladite solution aqueuse saline comportant au moins ledit tensio-actif, ladite salinité optimale étant telle qu'une émulsion formée par un échantillon desdits hydrocarbures et par un échantillon de ladite solution aqueuse saline comportant au moins ledit tensioactif et ayant une salinité correspondant à ladite valeur de salinité optimale soit triphasique ;

b) on réalise une pluralité d'émulsions formées par un échantillon desdits hydrocarbures et par un échantillon de ladite solution aqueuse saline comportant au moins ledit tensioactif, lesdites émulsions ayant des valeurs de salinité distinctes correspondant au moins à ladite salinité optimale, à deux valeurs de salinité encadrant ladite salinité optimale dans une limite de 5% à 10% de ladite salinité optimale, une valeur de salinité nulle et une valeur de salinité correspondant à la limite de solubilité dans l'eau des sels de ladite solution aqueuse saline, et on mesure ladite tension interfaciale pour chacune desdites émulsions ;

c) on détermine ledit modèle de l'évolution de la dite tension interfaciale en fonction de ladite salinité en recherchant des constantes dudit modèle de l'évolution de la dite tension interfaciale en minimisant un écart entre ledit modèle et lesdites mesures de ladite tension interfaciale, ledit modèle de l'évolution de ladite tension interfaciale en fonction de ladite salinité ayant un comportement non symétrique par rapport à ladite salinité optimale;

B) A partir au moins dudit simulateur d'écoulement incorporant ledit modèle calibré de l'évolution de ladite tension interfaciale en fonction de la salinité de ladite solution aqueuse saline comportant au moins un tensio-actif, on détermine un schéma pour une récupération desdits hydrocarbures de ladite formation souterraine, et on récupère lesdits hydrocarbures de ladite formation souterraine selon ledit schéma de récupération.

Selon une mise en oeuvre de l'invention, ledit modèle de l'évolution de la dite tension interfaciale $IFT_{wo}$ entre ladite solution aqueuse saline et lesdits hydrocarbures en fonction de ladite salinité s peut être défini selon une formule du type :

[Math 1]

$$IFT_{wo}(s) = IFT_{Inf} \left( \frac{F(s)}{IFT_{Inf}} \right)^{1-\exp\left(-\frac{(s-s_0)^2}{(a+bs)^2\ s_0{}^2}\right)}$$

avec

[Math 2]

$$F(s) = \frac{-Arctan\left(\frac{s-s_0}{0.01}\right)}{\pi}(IFT_{Max} - IFT_{Min}) + \frac{(IFT_{Max} + IFT_{Min})}{2}$$

et on peut déterminer des valeurs desdites constantes $IFT_{Inf}$, $IFT_{Min}$, $IFT_{Max}$, a et b dudit modèle de l'évolution de la dite tension interfaciale de la manière suivante : i) on attribue respectivement auxdites constantes $IFT_{Inf}$, $IFT_{Min}$ et $IFT_{Max}$ les valeurs desdites mesures de ladite tension interfaciale pour ladite salinité optimale $s_0$, pour ladite salinité nulle et pour ladite limite de solubilité des sels, ii) on détermine les valeurs desdites constantes a et b par une méthode de régression de manière à ajuster au moins lesdites mesures de ladite tension interfaciale pour lesdites deux valeurs de salinité encadrant ladite salinité optimale.

Selon une mise en oeuvre de l'invention, on peut réaliser l'étape a) de la manière suivante : on définit une pluralité de valeurs de salinité de ladite solution aqueuse saline comportant au moins un tensioactif, on génère une pluralité d'émulsions formées chacune par un échantillon desdits hydrocarbures et un échantillon de ladite solution aqueuse saline comportant au moins ledit tensioactif pour une desdites valeurs de ladite pluralité de valeurs de salinité, et on détermine ladite valeur de ladite salinité optimale en établissant un diagramme de phases en fonction de la salinité.

Selon une mise en oeuvre de l'invention, on peut mesurer ladite tension interfaciale par la méthode de la goutte tournante.

Selon une mise en oeuvre de l'invention, ledit schéma de récupération peut comprendre au moins une implantation d'au moins un puits injecteur et/ou d'au moins un puits producteur, et on peut forer lesdits puits de ladite implantation en les équipant d'infrastructures de production.

L'invention concerne en outre une utilisation du procédé tel que décrit ci-dessus pour la dépollution de ladite formation souterraine.

L'invention concerne en outre une utilisation du procédé tel que décrit ci-dessus pour l'exploitation desdits hydrocarbures de ladite formation souterraine.

D'autres caractéristiques et avantages du procédé selon l'invention, apparaîtront à la lecture de la description ci-après d'exemples non limitatifs de réalisations, en se référant aux figures annexées et décrites ci-après.

**Liste des figures**

La figure 1 présente un exemple de mesures de la tension interfaciale entre une solution aqueuse saline comportant un mélange de tensio-actifs et des hydrocarbures pour différentes valeurs de la salinité de la solution aqueuse saline.

La figure 2 présente un modèle d'évolution de la tension interfaciale en fonction de la salinité, déterminé par une mise en oeuvre du procédé selon l'invention, respectant les mesures de la tension interfaciale de la figure 1.

**Description des modes de réalisation**

De façon générale, l'un des objets de l'invention concerne un procédé pour la récupération des hydrocarbures contenus dans une formation souterraine, au moyen de l'injection d'une solution aqueuse comprenant un tensio-actif ou un mélange de tensio-actifs.

Le procédé selon l'invention est mis en oeuvre au moins au moyen d'un simulateur numérique d'écoulement, lui-même mis en oeuvre via des moyens informatiques tels qu'un ordinateur. Le simulateur d'écoulement selon l'invention incorpore un modèle de déplacement de la solution aqueuse comprenant le tensio-actif, appelé aussi "modèle de déplacement du tensio-actif" ou "modèle de déplacement du surfactant" du simulateur d'écoulement.

Le modèle de déplacement du tensio-actif selon l'invention est basé au moins sur un modèle de l'évolution de la tension interfaciale entre la solution aqueuse saline comprenant au moins un tensio-actif et les hydrocarbures en fonction au moins de la salinité de la solution aqueuse saline comprenant au moins un tensio-actif. Par modèle, on entend une expression analytique représentative de la grandeur physique d'intérêt (dans le cas d'espèce, la tension interfaciale) variant en fonction d'au moins un paramètre (dans le cas d'espèce, au moins la salinité). Il est bien clair que la tension interfaciale peut dépendre non seulement de la salinité, mais aussi de la concentration en tensio-actifs, de la température, etc. Toutefois, la présente invention ne concerne que la détermination d'un modèle de l'évolution de la tension interfaciale en fonction de la salinité, et pas en fonction d'autres paramètres. Par la suite, et à des fins de simplification, on parle de "modèle d'évolution de la tension interfaciale en fonction de la salinité" pour le modèle de l'évolution de la tension interfaciale entre la solution aqueuse saline comprenant au moins un tensio-actif et les hydrocarbures en fonction de la salinité de la solution aqueuse saline comprenant au moins le tensio-actif. Par la suite, et à des fins de simplification, on parle aussi de "simulateur d'écoulement incorporant un modèle d'évolution de la tension interfaciale en fonction de la salinité", pour un simulateur d'écoulement incorporant un modèle de déplacement de la solution aqueuse comprenant le tensio-actif basé sur un modèle d'évolution de la tension interfaciale en fonction de la salinité.

Le modèle de l'évolution de la tension interfaciale en fonction de la salinité selon l'invention dépend de constantes. Le procédé selon l'invention comporte une étape de détermination (aussi appelée calibration) des constantes intervenant dans le modèle de l'évolution de la tension interfaciale en fonction de la salinité, cette calibration étant réalisée en fonction de mesures de tensions interfaciales réalisées en laboratoire.

A partir au moins du simulateur d'écoulement incorporant le modèle calibré de l'évolution de la tension interfaciale en fonction de la salinité de la solution aqueuse saline comportant au moins un tensio-actif, on détermine un schéma pour une récupération desdits hydrocarbures de ladite formation souterraine, et on récupère lesdits hydrocarbures de ladite formation souterraine selon ledit schéma de récupération.

Le procédé selon l'invention requiert de disposer de :

- un échantillon des hydrocarbures contenus dans la formation souterraine étudiée ;

- un échantillon de la solution aqueuse saline comprenant le ou les tensio-actifs ;

- un simulateur d'écoulement incorporant au moins un modèle de l'évolution de la tension interfaciale entre la solution aqueuse saline comprenant au moins un tensio-actif et les hydrocarbures en fonction au moins de la salinité de la solution aqueuse saline comprenant au moins un tensio-actif (cf. ci-dessous).

De manière générale, le procédé selon l'invention comporte au moins les étapes suivantes

**1. Calibration du modèle de l'évolution de la tension interfaciale**

**1.1 Détermination de la salinité optimale**

**1.2 Mesures de la tension interfaciale**

**1.3 Calibration des constantes du modèle de l'évolution de la tension interfaciale**

**2. Récupération des hydrocarbures à partir du modèle de l'évolution de la tension interfaciale calibré**

Les différentes étapes du procédé selon l'invention sont détaillées ci-après.

**1. Calibration du modèle de l'évolution de la tension interfaciale**

Au cours de cette étape, il s'agit de calibrer les constantes d'un modèle de l'évolution de la tension interfaciale en fonction de la salinité (cf. sous-étape 1.3 décrite ci-dessous), à partir de mesures réalisées en laboratoire (cf. sous-étape 1.1 et sous-étape 1.2 décrites ci-dessous).

**1.1 Détermination de la salinité optimale**

Au cours de cette sous-étape, il s'agit de déterminer la valeur de la salinité optimale de la solution aqueuse saline comportant au moins ledit tensio-actif. De manière connue, la salinité optimale d'une la solution aqueuse saline comportant un tensio-actif est la salinité à laquelle une émulsion formée avec de l'huile et ladite solution aqueuse saline présente trois phases (système triphasique). Autrement dit, la salinité optimale est la salinité à laquelle la solution aqueuse permet au tensioactif d'être aussi peu soluble dans la solution aqueuse que dans l'huile. Encore reformulé, à la salinité optimale, le ou les tensioactifs présents initialement dans une solution aqueuse se retrouvent à l'interface entre la phase aqueuse et la phase huile. Encore dit autrement, l'apparition d'une phase intermédiaire bicontinue entre l'huile et la phase aqueuse indique la salinité pour laquelle la tension interfaciale est ultra basse. Cet état est également désigné comme un système de type « Winsor III ».

Selon une mise en oeuvre de l'invention, on détermine la salinité optimale telle que définie ci-dessus en établissant un diagramme de phases en fonction de la salinité, tel que décrit par exemple dans les documents (Winsor, 1959 ; Huh, 1979). Selon une mise en oeuvre de l'invention, on peut établir un diagramme de phases en fonction de la salinité en analysant des émulsions formées pour des valeurs de salinité de la solution aqueuse saline augmentant par pas régulier (on parle alors de balayage de salinité ou de "scan" de salinité), la salinité de l'émulsion présentant un type Winsor III étant alors qualifiée de salinité optimale. De manière préférée, les balayages de salinité sont faits à concentration en tensio-actif constante et/ou à température constante, de préférence à une température avoisinant celle de la formation souterraine ou de l'eau d'injection, c'est-à-dire environ 40°C.

Selon une mise en oeuvre de l'invention, on peut déterminer la salinité optimale d'une solution aqueuse de la manière suivante :

-   on définit une pluralité de valeurs de salinité. Selon une mise en oeuvre de l'invention, on peut définir par exemple une gamme de valeurs de salinité, et au moins un pas d'échantillonnage de cette gamme de valeurs de salinité. Selon une mise en oeuvre l'invention, la gamme de valeurs de salinité peut être comprise entre 0g/L et 100g/L, et est échantillonnée de manière régulière avec un pas d'échantillonnage de 1g/L. Alternativement, on peut définir plusieurs pas d'échantillonnages distincts, associés à des parties distinctes de la gamme de valeurs de salinités. De préférence, on définit un pas d'échantillonnage plus fin dans une partie de la gamme de valeurs de salinité pour laquelle la salinité optimale est attendue. Un pas d'échantillonnage plus fin dans une partie de la gamme autour de la valeur de salinité optimale attendue peut améliorer la précision de la détermination de la valeur de la salinité optimale réelle pour le système d'intérêt.

-   on génère une pluralité d'émulsions formées chacune par un échantillon des hydrocarbures contenus dans la formation souterraine et un échantillon de la solution aqueuse saline comprenant au moins le tensio-actif pour une valeur de la pluralité de valeurs de salinité définie ci-dessus. Selon une mise en oeuvre de l'invention, on génère une émulsion pour une valeur de la pluralité de valeurs de salinité par mise en contact d'un échantillon des hydrocarbures et un échantillon de la solution aqueuse saline pour la valeur de salinité d'intérêt, la mise en contact étant par exemple réalisée dans un tube à essai retourné lentement.

-   on examine les phases de chacune desdites émulsions et on détermine au moins, parmi lesdites émulsions, celle présentant un système triphasique. La valeur de la salinité optimale est alors fixée à la valeur de la salinité de cette émulsion. Selon une mise en oeuvre de l'invention, on peut réaliser des images photographiques de chacune des émulsions de manière régulière dans le temps (par exemple une fois par jour sur une durée d'au moins de 15 jours), et on analyse de manière automatique les phases présentes dans les différentes émulsions au cours du temps au moyen d'une méthode de traitement d'images appliquée aux images photographiques des émulsions prises dans le temps. Selon une mise en oeuvre de l'invention, on peut utiliser le logiciel libre de traitement d'images ImageJ, qui permet de détecter des interfaces (ici entre les différentes phases) et ainsi d'estimer le volume de chacune des phases. L'image photographique de l'émulsion présentant une phase centrale (c'est-à-dire avec une autre phase en-dessous et une autre phase au-dessus) ayant le plus grand volume correspond à l'émulsion dont la salinité est la plus proche de la salinité optimale.

Alternativement, on peut mettre en oeuvre la méthode décrite dans la demande de brevet, dont le numéro de dépôt est FR 20/01859, et dont les principales étapes sont :

- On injecte dans un récipient, les deux liquides (phase aqueuse et phase organique) et la formulation tensioactive avec une valeur prédéterminée de la salinité, afin de former un système biphasique, dans lequel le premier liquide comporte des gouttes du deuxième liquide, en particulier des petites gouttes ;
- On réalise une mesure optique d'au moins le premier liquide au sein du récipient pour déterminer la présence de gouttes du deuxième liquide dans le premier liquide ; et
- Si la mesure optique détermine la présence de gouttes au sein du premier liquide, on fait varier la valeur de la salinité au sein du récipient et on réitère l'étape b) de mesure optique, et sinon (si la mesure optique ne détecte aucune goutte au sein du premier liquide) la salinité de la formulation tensioactive qui minimise la tension interfaciale (autrement dit la salinité optimale) est la salinité pour laquelle la mesure dans le premier liquide ne détermine la présence d'aucune goutte du deuxième liquide au sein du premier liquide (c'est-à-dire la dernière valeur de la salinité considérée).

**1.2 Mesures de la tension interfaciale**

Au cours de cette sous-étape, il s'agit de réaliser des mesures de la tension interfaciale pour une pluralité d'émulsions distinctes formées chacune par un échantillon des hydrocarbures d'intérêt et un échantillon de la solution aqueuse saline comportant au moins un tensioactif, les émulsions ayant des valeurs de salinité distinctes correspondant au moins aux cinq valeurs de salinité suivantes : la salinité optimale, deux valeurs de salinité encadrant la salinité optimale dans une limite de 5% à 10% de la salinité optimale (soit des valeurs proches de la salinité optimale), et deux valeurs de salinité correspondant à la salinité nulle et (sensiblement) à la limite de solubilité des sels dans l'eau de la solution aqueuse saline (soit des valeurs éloignées de la salinité optimale). Par sensiblement, on entend une valeur de salinité très proche de la limite de solubilité des sels, dans la limite des incertitudes de la mesure.

Autrement dit, on mesure la tension interfaciale pour au moins cinq valeurs de salinité distinctes d'une gamme de salinité très large, allant de la salinité nulle à la limite de solubilité des sels, et échantillonnant plus finement la salinité autour de la salinité optimale.

Selon une mise en oeuvre de l'invention, la limite de solubilité des sels classiquement utilisés pour une récupération d'hydrocarbures dans une formation souterraine, comme par exemple des sels de NaCl est atteinte pour une valeur de 360g/L.

Avantageusement, on peut mesurer la tension interfaciale pour 10 valeurs de salinité distinctes, incluant les cinq valeurs de salinité précitées. Une augmentation du nombre de mesures permet d'accroitre la précision du modèle de l'évolution de la tension interfaciale en fonction de la salinité selon l'invention.

Selon une mise en oeuvre de l'invention, on peut mesurer la tension interfaciale entre la solution aqueuse saline et les hydrocarbures d'au moins une émulsion au moyen de la méthode de la goutte tournante. Selon une mise en oeuvre de l'invention, on peut mesurer la tension interfaciale entre la solution aqueuse saline et les hydrocarbures au moyen d'un tensiomètre. De manière classique, la méthode de la goutte tournante s'applique de la manière suivante : une goutte de pétrole est injectée dans un tube capillaire en verre rempli d'eau avec tensioactif à une température donnée. Le tube subit une rotation provoquant sous l'action de la force centrifuge un allongement de la goutte le long de l'axe de rotation. Selon la relation de Vonnegut (cf. le document (Vonnegut, 1942)), et à condition que la goutte soit au minimum quatre fois plus longue que haute, la tension interfaciale $IFT_{wo}$ dépend du rayon minimal de la goutte en rotation $r$, de la vitesse angulaire $w$ et de la différence de la masse volumique de la phase lourde (phase aqueuse) $\rho_L$ et de la phase légère (phase organique) $\rho_l$, ce qui peut s'exprimer selon une formule du type :
[Math 3]

$$IFT_{wo} = \frac{r^3 w^2 (\rho_L - \rho_l)}{4} \quad (1)$$

Selon une alternative de mise en oeuvre de l'invention, on peut mesurer la tension interfaciale entre la solution aqueuse saline et les hydrocarbures d'au moins une émulsion au moyen de la mesure des ratios de solubilité et la loi de Huh, qui peut s'exprimer selon la formule suivante : $\gamma = \frac{0.3}{\sigma^2}$ , avec $\gamma$ la tension interfaciale entre l'huile et l'eau et $\sigma$ le ratio de solubilité entre l'huile et l'eau. Cette relation utilise un paramètre empirique, $\sigma$, déterminé dans un cas particulier de système de tensioactifs purs (Huh, 1979), ce qui a pour conséquence que cette méthode est moins précise que la méthode de la goutte tournante, mais est plus simple de mise en oeuvre car elle ne requiert pas d'instrumentation particulière (une enceinte chauffée suffit).

A l'issue de cette sous-étape, on obtient donc au moins cinq valeurs de tension interfaciale, mesurées pour au moins cinq valeurs de salinité différentes échantillonnant une gamme large de salinité, incluant la salinité nulle et la limite de solubilité des sels, et échantillonnant au moins la salinité autour de la salinité optimale.

### 1.3 Calibration des constantes du modèle de l'évolution de la tension interfaciale

Selon l'invention, on utilise un modèle de l'évolution de la tension interfaciale en fonction de la salinité ayant un comportement non symétrique par rapport à la salinité optimale.

Selon une mise en oeuvre de l'invention, on utilise un modèle de l'évolution de la tension interfaciale $IFT_{wo}$ en fonction de la salinité $s$ qui peut s'écrire selon une formule du type :

[Math 4]

$$IFT_{wo}(s) = IFT_{Inf} \left(\frac{F(s)}{IFT_{Inf}}\right)^{1-\exp\left(-\frac{(s-s_0)^2}{(a+bs)^2\, s_0^2}\right)} \quad (2)$$

Avec

[Math 5]

$$F(s) = \frac{-Arctan\left(\frac{s-s_0}{0.01}\right)}{\pi}(IFT_{Max} - IFT_{Min}) + \frac{(IFT_{Max} + IFT_{Min})}{2}$$

où $IFT_{Inf}$, $IFT_{Min}$, $IFT_{Max}$, a et b sont des constantes à déterminer, selon l'invention, à partir des mesures de tension interfaciale réalisées à l'étape précédente, et $s_0$ est la salinité optimale.

Selon cette mise en oeuvre de l'invention, on détermine les constantes du modèle de l'évolution de la tension interfaciale de la manière suivante : $IFT_{Inf}$ correspond à la mesure de la tension interfaciale pour la salinité optimale $s_0$, $IFT_{Min}$ et $IFT_{Max}$ correspondent respectivement aux mesures de la tension interfaciale pour la salinité nulle et la limite de solubilité des sels dans l'eau, et a et b sont déterminées par une méthode de régression de manière à ajuster au moins les mesures de tension interfaciale pour les deux valeurs de salinité encadrant la salinité optimale.

Selon une mise en oeuvre de l'invention, on peut utiliser le logiciel Mathematica de la société Wolfram (Royaume Uni) pour déterminer les constantes du modèle de l'évolution de la tension interfaciale à partir des mesures de la tension interfaciale réalisées à la sous-étape précédente, ou tout autre logiciel analogue.

A l'issue de cette sous-étape, on dispose donc d'un modèle de l'évolution de la tension interfaciale en fonction de la salinité calibré, c'est-à-dire d'une expression analytique de l'évolution de la tension interfaciale en fonction de la salinité.

A partir d'un tel modèle incorporé à un modèle de déplacement d'un tensio-actif, lui-même incorporé dans un simulateur d'écoulement, on peut alors prédire numériquement notamment des productions d'hydrocarbures suivant différents schémas de récupération, et ainsi déterminer comment récupérer les hydrocarbures de la formation souterraine d'intérêt, comme cela est décrit dans l'étape suivante.

### 2. Récupération des hydrocarbures à partir du modèle de l'évolution de la tension interfaciale calibré

Au cours de cette étape, il s'agit de déterminer au moins un schéma de récupération des hydrocarbures contenus dans la formation souterraine, que ce soit pour exploiter ces hydrocarbures, ou pour dépolluer la formation souterraine de ces hydrocarbures.

Cette récupération des hydrocarbures de la formation souterraine étudiée peut être réalisée dans le cadre d'une exploitation des hydrocarbures de la formation souterraine, ou bien dans le cadre d'une dépollution de la formation souterraine.

De manière générale, un schéma de récupération des hydrocarbures d'une formation souterraine est caractérisé par une géométrie et une implantation (position, espacement et nombre) des puits injecteurs et producteurs. Mais un schéma de récupération des hydrocarbures comprend également la définition d'un type de récupération. Dans le cas d'une récupération assistée des hydrocarbures par injection d'une solution aqueuse saline comprenant au moins un tensio-actif, le schéma de récupération peut également être défini par un type et une quantité de tensio-actif injecté dans la formation étudiée, mais aussi notamment par la salinité de la solution aqueuse comprenant le tensio-actif.

Dans le cadre d'une exploitation des hydrocarbures présents dans une formation souterraine, un schéma de récupération des hydrocarbures doit par exemple permettre un fort taux de récupération des hydrocarbures piégés dans la formation, sur une longue durée d'exploitation, et nécessitant un nombre de puits à forer limité. Dans le cadre d'une dépollution d'une formation souterraine dans laquelle sont présents des hydrocarbures non souhaités, un schéma de récupération des hydrocarbures doit par exemple permettre un fort taux de récupération des hydrocarbures piégés dans la formation, sur une durée courte, et nécessitant un nombre de puits à forer limité.

Selon l'invention, la détermination du schéma de récupération des hydrocarbures de la formation est réalisée à l'aide d'une simulation numérique d'écoulement exploitant le modèle de déplacement du tensio-actif, incorporant lui-même le modèle calibré de l'évolution de la tension interfaciale en fonction de la salinité de la solution aqueuse saline comportant au moins un tensio-actif tel que décrit ci-dessus. Un exemple de simulateur d'écoulement (aussi appelé simulateur de réservoir) permettant la prise en compte d'un modèle de déplacement du tensio-actif est le logiciel PumaFlow® (IFP Energies nouvelles, France). Selon l'invention, à tout instant t de la simulation, le simulateur d'écoulement résout l'ensemble des équations d'écoulement propres à chaque maille et délivre des valeurs solutions des inconnues (saturations, pressions, concentrations, température,...) prédites à cet instant t. De cette résolution, découle la connaissance des quantités d'huile produites et de l'état du de la formation souterraine (distribution des pressions, saturations, etc...) à l'instant considéré. Au moyen du modèle de déplacement du tensio-actif déterminé à l'issue des étapes ci-dessus, le simulateur d'écoulement permet de prédire de manière fiable les performances de déplacement procurées par le tensio-actif dans diverses conditions d'injection et de salinité.

Selon un mode de mise en oeuvre de l'invention, on définit différents schémas de récupération du fluide de la formation étudiée et on estime, à l'aide du simulateur d'écoulement intégrant le modèle de déplacement du tensio-actif déterminé à l'issue des étapes ci-dessus, au moins un critère, tel que la quantité d'hydrocarbures produits selon chacun des différents schémas de récupération, la courbe représentative de l'évolution de la production dans le temps au niveau de chacun des puits etc. Le schéma selon lequel les hydrocarbures du gisement seront réellement récupérés peut alors correspondre à celui satisfaisant au moins un des critères d'évaluation des différents schémas de récupération.

Autrement dit, le procédé selon l'invention permet de simuler de manière précise les écoulements engendrés dans une formation souterraine comportant des hydrocarbures et dans laquelle on injecterait une solution aqueuse saline comprenant au moins un tensio-actif, et ce pour différents types et quantités de tensio-actif, pour différents salinités de la solution aqueuse comprenant le tensio-actif, pour différentes implantations de puits producteur-injecteur etc. Le procédé selon l'invention permet alors de déterminer, de manière numérique, et donc peu coûteuse, un schéma de récupération adapté à la récupération des hydrocarbures d'une formation.

Puis, une fois un schéma de récupération sélectionné, les hydrocarbures piégés dans la formation sont récupérés en fonction de ce schéma de récupération, notamment en injectant la solution aqueuse comprenant le tensio-actif, en forant les puits injecteurs et producteurs du schéma de récupération ainsi déterminés, de manière à produire les hydrocarbures, et en installant les infrastructures de production nécessaires au développement du gisement ou à la dépollution des sols. Notamment le type de tensio-actif, la concentration de ce tensio-actif et la salinité de la solution aqueuse comprenant le tensio-actif ont été prédéterminés au moyen du procédé selon l'invention.

Il est bien entendu que le schéma de récupération peut être évolutif sur la durée d'une récupération des hydrocarbures d'une formation, en fonction des connaissances relatives à cette formation acquises pendant la récupération, des améliorations dans les différents domaines techniques intervenant lors d'une récupération des hydrocarbures d'une formation souterraine (améliorations dans le domaine du forage, de la récupération assistée par exemple).

Il est bien clair que le procédé selon l'invention comprend des étapes mises en oeuvre au moyen d'un équipement (par exemple un poste de travail informatique) comprenant des moyens de traitement des données (un processeur) et des moyens de stockage de données (une mémoire, en particulier un disque dur), ainsi qu'une interface d'entrée et de sortie pour saisir des données et restituer les résultats du procédé.

En particulier, les moyens de traitement de données sont configurés pour mettre en oeuvre l'étape de détermination d'un schéma de récupération des hydrocarbures contenus dans la formation, cette étape nécessitant la mise en oeuvre d'un simulateur d'écoulement implémentant le modèle de déplacement du tensio-actif calibré tel que décrit aux étapes ci-dessus.

En outre, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre notamment de l'étape de détermination d'un schéma de récupération des hydrocarbures contenus dans la formation tel que décrit précédemment, lorsque ledit programme est exécuté sur un ordinateur.

L'invention concerne en outre une utilisation du procédé tel que décrit ci-dessus pour une exploitation des hydrocarbures de la formation. L'utilisation du procédé selon l'invention est particulièrement pertinente pour l'exploitation des hydrocarbures d'une formation, car l'injection d'au moins un solution aqueuse saline comportant au moins un tensio-actif est efficace pour la récupération par des hydrocarbures, et ce d'autant plus que la tension interfaciale in situ de la solution aqueuse saline comportant au moins un tensio-actif est adaptée. Or l'étape 1) du procédé selon l'invention permet de modéliser de manière précise une telle tension interfaciale d'une solution aqueuse saline comportant au moins un tensio-actif.

L'invention concerne également une utilisation du procédé tel que décrit ci-dessus pour une dépollution d'une formation souterraine comprenant des hydrocarbures. L'utilisation du procédé selon l'invention est particulièrement pertinente pour la dépollution d'une formation souterraine, car l'injection d'au moins un solution aqueuse saline comportant au moins un tensio-actif permet de laver la roche polluée par des hydrocarbures, et ce lavage est d'autant plus efficace que la tension interfaciale in situ de la solution aqueuse saline comportant au moins un tensio-actif est adaptée. Or l'étape 1) du procédé selon l'invention permet de modéliser de manière précise le pouvoir lavant (la tension interfaciale) d'une solution aqueuse saline comportant au moins un tensio-actif.

**Exemples**

Les avantages du procédé selon l'invention sont présentés ci-après dans un exemple d'application.

Pour cet exemple d'application, on utilise une solution aqueuse saline contenant les ions suivants : NaCl, KCl, $CaCl_2$ $2H_2O$, $MgCL_2$ $6H_2O$. De plus, on ajoute à cette solution aqueuse saline un mélange de tensioactifs sulfonés de types AGES et IOS, présents à une concentration de 8g/L. Par ailleurs, on utilise du dodécane en tant qu'hydrocarbures. Le dodécane est en effet un EACN ("Equivalent Alkane Carbon Number") dont les propriétés interfaciales sont identiques à celles du pétrole. Autrement dit, il s'agit d'un alcane qui, mis en contact avec une formulation de tensioactifs de référence, donne une microémulsion aux mêmes salinités que le pétrole.

L'application des sous-étapes 1.1 à 1.3 du procédé selon l'invention à l'exemple d'application sont décrites ci-après.

**a) Détermination de la salinité optimale**

On réalise un balayage de salinité (ou scan de salinité) en augmentant la concentration en sels de la solution aqueuse depuis une valeur de 0 g/L à une valeur de 100g/L, par pas de 5g/L, sauf pour des salinités proches de la valeur attendue de la salinité optimale (environ 50 g/L), pour lesquelles on utilise un pas de 1g/L. Les scans de salinité sont faits à une température avoisinant celles des réservoirs ou de l'eau d'injection, c'est-à-dire 40°C.

Pour réaliser les scans de salinité, on utilise des tubes Wheaton dans lesquels on verse 2mL de chaque solution aqueuse saline avec le mélange de tensioactifs décrite ci-dessus, et 2mL de dodécane pour la phase huile. Une photographie est réalisée juste après la mise en contact (c'est-à-dire après retournement lent d'un tube), à 24h, 48h et 72h. Les gammes sont placées dans des étuves thermostatées et gardées pendant 21 jours.

L'analyse des différentes phases dans les tubes, au bout de 21 jours, permet de déterminer la salinité optimale, qui est la salinité pour laquelle on peut observer trois phases distinctes dans le tube, le mélange de tensio-actifs se retrouvant à l'interface entre la phase aqueuse et la phase huile. Pour cet exemple d'application, l'analyse des différentes phases dans les tubes permet de conclure que la salinité optimale est d'environ 50g/L. L'analyse des différentes phases dans les tubes a été réalisée en analysant les images photographiques de manière automatique, au moyen du logiciel libre de traitement d'image ImageJ. Ce logiciel permet de détecter des interfaces (ici entre les différentes phases) et ainsi d'estimer le volume de chacune des phases.

**b) Mesure des tensions interfaciales**

Pour cet exemple d'application, les tensions interfaciales de cinq émulsions formées pour les cinq valeurs de salinité décrites à l'étape 1.2 sont mesurées par la méthode de la goutte tournante.

Plus précisément, des mesures de la tension interfaciale entre la phase aqueuse et la phase huile sont réalisées pour des solutions aqueuses salines ayant des salinités égales à :

- la salinité optimale, soit 50 g/L ;

- deux valeurs encadrant la salinité optimale, soient 47 g/L et 53 g/L ;

- deux valeurs correspondant aux bornes de la gamme de salinité, soient 0 g/L et 100 g/L.

Préalablement à la mesure des tensions interfaciales avec la méthode de la goutte tournante, on mesure la masse volumique de la solution aqueuse saline comportant le mélange de tensio-actifs avec un densimètre DMA 4500M (Anton Paar, Autriche), constitué d'un tube en U oscillant thermostaté. Pour ce faire, on injecte un faible volume de la solution aqueuse saline comportant le mélange de tensio-actifs (1 à 2mL) et on mesure la masse volumique du mélange. Au-delà d'une température de 80°C, c'est la méthode du pycnomètre qui est utilisée. Il s'agit d'une petite fiole dont on connait la masse sèche et la masse avec de l'eau. On peut ainsi en déduire le volume de la fiole. Une pesée est ensuite réalisée avec la solution dont on cherche la masse volumique, et l'on peut ainsi déduire la masse volumique d de la solution aqueuse saline selon la formule suivante :

[Math 6]

$$d = \frac{masse\ de\ solution}{masse\ d'eau}$$

Les tensions interfaciales sont mesurées avec un tensiomètre par exemple de type SVT20N (DataPhysics Instruments, Allemagne), utilisant la méthode de la goutte tournante.

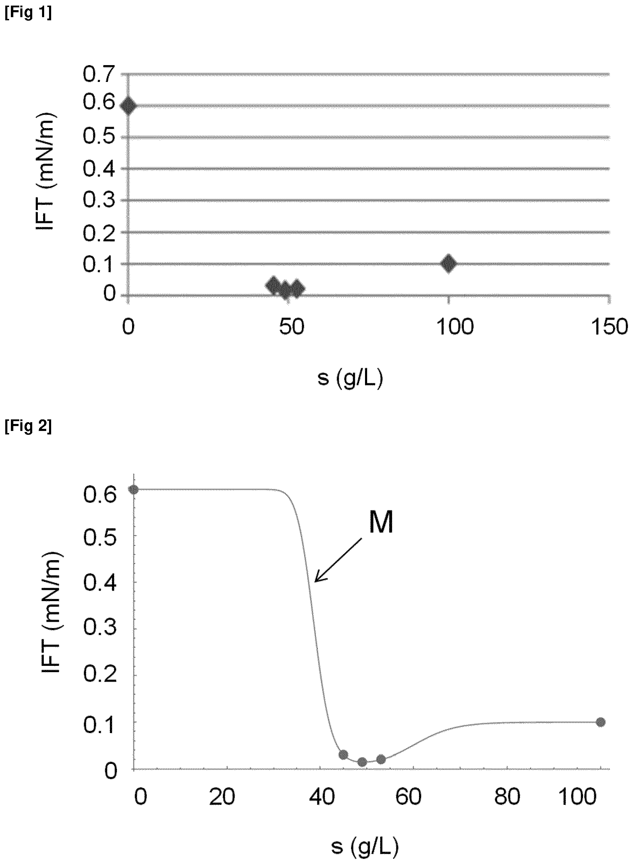

La figure 1 présente les valeurs de tension interfaciale IFT mesurées pour les cinq valeurs de salinité s décrites ci-dessus.

**c) Calibration du modèle d'évolution de la tension interfaciale en fonction de la salinité**

Pour cet exemple d'application, on utilise le modèle d'évolution de la tension interfaciale décrit par l'équation 2 ci-dessus.

Selon cette mise en oeuvre de l'invention, les constantes du modèle de l'évolution de la tension interfaciale en fonction de la salinité sont définies de la manière suivante : on attribue la mesure de la tension interfaciale pour la salinité optimale (50 g/L) à la constante $IFT_{Inf}$, les mesures de la tension interfaciale pour la salinité nulle et la limite de solubilité des sels dans l'eau (0 g/L et 100 g/L) aux constantes $IFT_{Min}$ et $IFT_{Max}$, et les constantes a et b sont déterminées par une méthode de régression de manière à ajuster les mesures de tension interfaciale pour les deux valeurs de salinité encadrant la salinité optimale (47 g/L et 53 g/L). Plus précisément, pour déterminer les constantes a et b, on utilise le logiciel Mathematica, en calant la corrélation définie par l'équation 2 sur les deux valeurs de salinité proches de la salinité optimale.

La figure 2 montre une courbe M correspondant au modèle calibré de l'évolution de la tension interfaciale en fonction de la salinité. On peut observer que cette courbe passe parfaitement par les mesures (représentées par des points) de la tension interfaciale réalisées pour les cinq valeurs de salinité décrites ci-dessus. On peut en outre observer que le modèle de l'évolution de la tension interfaciale en fonction de la salinité est clairement non symétrique par rapport à la salinité optimale (50 g/L), ce qui était nécessaire pour expliquer les mesures réalisées à la salinité nulle et à la limite de solubilité des sels.

Ainsi, le procédé selon l'invention permet de déterminer un modèle de l'évolution de la tension interfaciale en fonction de la salinité réaliste, satisfaisant les mesures réalisées en laboratoire. De plus, le procédé selon l'invention permet de limiter le nombre d'expériences de laboratoire à réaliser.

**Revendications**

1. Procédé pour la récupération des hydrocarbures contenus dans une formation souterraine par injection d'une solution aqueuse saline comportant au moins un tensio-actif, au moyen d'un simulateur numérique d'écoulement incorporant au moins un modèle de l'évolution de la tension interfaciale entre ladite solution aqueuse saline et lesdits hydrocarbures en fonction au moins de la salinité de ladite solution aqueuse saline comportant au moins ledit tensio-actif, **caractérisé en ce qu'**on réalise au moins les étapes suivantes :

    A) on calibre ledit modèle de l'évolution de la dite tension interfaciale entre ladite solution aqueuse saline et lesdits hydrocarbures en fonction de ladite salinité de la manière suivante :

        a) on détermine une valeur de salinité optimale de ladite solution aqueuse saline comportant au moins ledit tensio-actif, ladite salinité optimale étant telle qu'une émulsion formée par un échantillon desdits hydrocarbures et par un échantillon de ladite solution aqueuse saline comportant au moins ledit tensioactif et ayant une salinité correspondant à ladite valeur de salinité optimale soit triphasique ;

b) on réalise une pluralité d'émulsions formées par un échantillon desdits hydrocarbures et par un échantillon de ladite solution aqueuse saline comportant au moins ledit tensioactif, lesdites émulsions ayant des valeurs de salinité distinctes correspondant au moins à ladite salinité optimale, à deux valeurs de salinité encadrant ladite salinité optimale dans une limite de 5% à 10% de ladite salinité optimale, une valeur de salinité nulle et une valeur de salinité correspondant à la limite de solubilité dans l'eau des sels de ladite solution aqueuse saline, et on mesure ladite tension interfaciale pour chacune desdites émulsions ;

c) on détermine ledit modèle de l'évolution de la dite tension interfaciale en fonction de ladite salinité en recherchant des constantes dudit modèle de l'évolution de la dite tension interfaciale en minimisant un écart entre ledit modèle et lesdites mesures de ladite tension interfaciale, ledit modèle de l'évolution de ladite tension interfaciale en fonction de ladite salinité ayant un comportement non symétrique par rapport à ladite salinité optimale ;

B) A partir au moins dudit simulateur d'écoulement incorporant ledit modèle calibré de l'évolution de ladite tension interfaciale en fonction de la salinité de ladite solution aqueuse saline comportant au moins un tensio-actif, on détermine un schéma pour une récupération desdits hydrocarbures de ladite formation souterraine, et on récupère lesdits hydrocarbures de ladite formation souterraine selon ledit schéma de récupération.

2. Procédé selon la revendication 1, dans lequel, ledit modèle de l'évolution de la dite tension interfaciale $IFT_{wo}$ entre ladite solution aqueuse saline et lesdits hydrocarbures en fonction de ladite salinité s est défini selon une formule du type :

$$IFT_{wo}(s) = IFT_{Inf}\left(\frac{F(s)}{IFT_{Inf}}\right)^{1-\exp\left(-\frac{(s-s_0)^2}{(a+bs)^2\ s_0{}^2}\right)}$$

avec

$$F(s) = \frac{-Arctan\left(\frac{s-s_0}{0.01}\right)}{\pi}(IFT_{Max} - IFT_{Min}) + \frac{(IFT_{Max}+IFT_{Min})}{2}$$

et dans lequel on détermine des valeurs desdites constantes $IFT_{Inf}$, $IFT_{Min}$, $IFT_{Max}$, a et b dudit modèle de l'évolution de la dite tension interfaciale de la manière suivante : i) on attribue respectivement auxdites constantes $IFT_{Inf}$, $IFT_{Min}$ et $IFT_{Max}$ les valeurs desdites mesures de ladite tension interfaciale pour ladite salinité optimale $s_0$, pour ladite salinité nulle et pour ladite limite de solubilité des sels, ii) on détermine les valeurs desdites constantes a et b par une méthode de régression de manière à ajuster au moins lesdites mesures de ladite tension interfaciale pour lesdites deux valeurs de salinité encadrant ladite salinité optimale.

3. Procédé selon l'une des revendications précédentes, dans lequel on réalise l'étape a) de la manière suivante : on définit une pluralité de valeurs de salinité de ladite solution aqueuse saline comportant au moins un tensioactif, on génère une pluralité d'émulsions formées chacune par un échantillon desdits hydrocarbures et un échantillon de ladite solution aqueuse saline comportant au moins ledit tensioactif pour une desdites valeurs de ladite pluralité de valeurs de salinité, et on détermine ladite valeur de ladite salinité optimale en établissant un diagramme de phases en fonction de la salinité.

4. Procédé selon l'une des revendications précédentes, dans lequel on mesure ladite tension interfaciale par la méthode de la goutte tournante.

5. Procédé selon l'une des revendications précédentes, dans lequel ledit schéma de récupération comprend au moins une implantation d'au moins un puits injecteur et/ou d'au moins un puits producteur, et dans lequel on fore lesdits puits de ladite implantation en les équipant d'infrastructures de production.

6. Utilisation du procédé selon l'une des revendications précédentes pour la dépollution de ladite formation souterraine.

7. Utilisation du procédé selon l'une des revendications 1 à 5 pour l'exploitation desdits hydrocarbures de ladite formation souterraine.

**Patentansprüche**

1. Verfahren zur Rückgewinnung von Kohlenwasserstoffen, die in einer unterirdischen Formation enthalten sind, durch Einspritzen einer wässrigen Salzlösung, die mindestens ein Tensid enthält, mithilfe eines digitalen Strömungssimulators, der mindestens ein Entwicklungsmodell der Grenzflächenspannung zwischen der wässrigen Salzlösung und den Kohlenwasserstoffen enthält, in Abhängigkeit von der Salinität der wässrigen Salzlösung, die mindestens das Tensid enthält, **dadurch gekennzeichnet, dass** mindestens die folgenden Schritte durchgeführt werden:

    A) das Entwicklungsmodell der Grenzflächenspannung zwischen der wässrigen Salzlösung und den Kohlenwasserstoffen in Abhängigkeit von der Salinität wird auf folgende Weise kalibriert:

        a) ein optimaler Salinitätswert der wässrigen Salzlösung, die mindestens das Tensid enthält, wird bestimmt, wobei die optimale Salinität so beschaffen ist, dass eine Emulsion, die durch eine Probe der Kohlenwasserstoffe und eine Probe der wässrigen Salzlösung, die mindestens das Tensid enthält und eine dem Salinitätswert entsprechende Salinität aufweist, gebildet wird, dreiphasig ist;
        b) eine Vielzahl von Emulsionen wird hergestellt, die durch eine Probe der Kohlenwasserstoffe und durch eine Probe der wässrigen Lösung, die mindestens das Tensid enthält, gebildet werden, wobei die Emulsionen verschiedene Salinitätswerte aufweisen, die mindestens der optimalen Salinität, zwei Salinitätswerten, die die optimale Salinität in einer Grenze von 5 % bis 10 % einrahmen, einem Salinitätswert null und einen Salinitätswert entsprechen, der der Löslichkeitsgrenze der Salze der wässrigen Salzlösung in Wasser entspricht, und die Grenzflächenspannung für jede der Emulsionen wird gemessen;
        c) das Entwicklungsmodell der Grenzflächenspannung in Abhängigkeit der Salinität wird bestimmt, indem Konstanten des Entwicklungsmodells der Grenzflächenspannung gesucht werden, indem eine Abweichung zwischen dem Modell und den Messwerten der Grenzflächenspannung minimiert wird, wobei das Entwicklungsmodell der Grenzflächenspannung in Abhängigkeit von der Salinität ein nichtsymmetrisches Verhalten im Verhältnis zur optimalen Salinität aufweist;

    B) Auf Grundlage des Strömungssimulators, der das Entwicklungsmodell der Grenzflächenspannung beinhaltet, das in Abhängigkeit von der Salinität der wässrigen Salzlösung, die mindestens ein Tensid enthält, kalibriert wurde, wird ein Schema für die Rückgewinnung der Kohlenwasserstoffe der unterirdischen Formation festgelegt und die Kohlenwasserstoffe der unterirdischen Formation werden nach dem Rückgewinnungsschema zurückgewonnen.

2. Verfahren nach Anspruch 1, wobei das Entwicklungsmodell der Grenzflächenspannung $IFT_{wo}$ zwischen der wässrigen Salzlösung und den Kohlenwasserstoffen in Abhängigkeit von der Salinität **s** nach einer Formel des folgenden Typs definiert ist:

$$IFT_{wo}(s) = IFT_{Inf}\left(\frac{F(s)}{IFT_{Inf}}\right)^{1-exp\left(\frac{(s-s_0)^2}{(a+bs)^2 s0^2}\right)}$$

mit

$$F(s) = \frac{-Arctan\left(\frac{s-s_0}{0,01}\right)}{\pi}(IFT_{Max} - IFT_{Min} + \frac{(IFT_{Max}+IFT_{Min})}{2}$$

und wobei Werte der Konstanten **$IFT_{Inf}$, $IFTMin$, $IFTMax$,** a und b des Entwicklungsmodells der Grenzflächenspannung auf folgende Weise bestimmt werden:
i) den Konstanten **$IFT_{Inf}$, $IFT_{Min}$, $IFT_{Max}$** werden die Messwerte der Grenzflächenspannung für die optimale Salinität **s0,** für die Salinität null und für die Löslichkeitsgrenze der Salze zugewiesen, ii) die Werte der Konstanten a und b werden durch ein Regressionsverfahren so bestimmt, dass mindestens die Messwerte der Grenzflächenspannung für die zwei Salinitätswerte bestimmt werden, die die optimale Salinität einrahmen.

**3.** Verfahren nach einem der vorhergehenden Ansprüche, wobei Schritt a) auf folgende Weise durchgeführt wird: eine Vielzahl von Salinitätswerten der wässrigen Salzlösung, die mindestens ein Tensid enthält, wird definiert, eine Vielzahl von Emulsionen wird erzeugt, die jeweils durch eine Probe der Kohlenwasserstoffe und eine Probe der wässrigen Salzlösung, die mindestens das Tensid enthält, für einen der Werte der Vielzahl von Salinitätswerten gebildet werden, und der Wert der optimalen Salinität wird bestimmt, indem ein Phasendiagramm in Abhängigkeit von der Salinität erstellt wird.

**4.** Verfahren nach einem der vorhergehenden Ansprüche, wobei die Grenzflächenspannung durch das Spinning-Drop-Verfahren gemessen wird.

**5.** Verfahren nach einem der vorhergehenden Ansprüche, wobei das Schema der Rückgewinnung mindestens einen Standort eines Einspritzbohrlochs und/oder mindestens einen Standort eines Produktionsbohrlochs umfasst und wobei die Bohrlöcher des Standorts unter Ausstattung mit Produktionsinfrastrukturen gebohrt werden.

**6.** Nutzung des Verfahrens nach einem der vorhergehenden Ansprüche für die Schadstoffsanierung der unterirdischen Formation.

**7.** Nutzung des Verfahrens nach einem der Ansprüche 1 bis 5 für die Ausbeutung der Kohlenwasserstoffe der unterirdischen Formation.

**Claims**

**1.** Method for recovery of hydrocarbons present in an underground formation by injection of a saline aqueous solution comprising at least one surfactant, by means of a numerical flow simulator including at least one model of the evolution of the interfacial tension between said saline aqueous solution and said hydrocarbons as a function at least of the salinity of said saline aqueous solution comprising at least said surfactant, **characterized in that** at least the following steps are carried out:

A) calibrating said model of the evolution of said interfacial tension between said saline aqueous solution and said hydrocarbons as a function of said salinity as follows:

a) determining an optimum salinity value for said saline aqueous solution comprising at least said surfactant, said optimum salinity being such that an emulsion formed by a sample of said hydrocarbons and a sample of said saline aqueous solution comprising at least said surfactant and having a salinity corresponding to said optimum salinity value is a three-phase emulsion;
b) preparing a plurality of emulsions formed by a sample of said hydrocarbons and a sample of said saline aqueous solution comprising at least said surfactant, said emulsions having distinct salinity values corresponding at least to said optimum salinity, to two salinity values bounding said optimum salinity within a 5% to 10% limit of said optimum salinity, a zero salinity value and a salinity value corresponding to the water solubility limit of the salts of said saline aqueous solution, and measuring said interfacial tension for each of said emulsions;
c) determining said model of said interfacial tension evolution as a function of said salinity by seeking constants of said model of said interfacial tension evolution by minimizing a difference between said model and said measurements of said interfacial tension, said model of said interfacial tension evolution as a function of said salinity having a non-symmetric behaviour with respect to said optimum salinity;

B) from at least said flow simulator including said calibrated model of the evolution of said interfacial tension as a function of the salinity of said saline aqueous solution comprising at least one surfactant, determining a scheme for recovery of said hydrocarbons from said underground formation, and recovering said hydrocarbons from said underground formation according to said recovery scheme.

**2.** Method according to Claim 1, wherein said model of the evolution of said interfacial tension $IFT_{WO}$ between said saline aqueous solution and said hydrocarbons as a function of said salinity s is defined with a formula of the type:

$$IFT_{wo}(s) = IFT_{Inf} \left( \frac{F(s)}{IFT_{Inf}} \right)^{1-\exp\left(-\frac{(s-s_0)^2}{(a+bs)^2 \, s_0^2}\right)}$$

with

$$F(s) = \frac{-Arctan\left(\frac{s-s_0}{0.01}\right)}{\pi} (IFT_{Max} - IFT_{Min}) + \frac{(IFT_{Max}+IFT_{Min})}{2}$$

and wherein values of said constants *IFT$_{Inf}$*, *IFT$_{Min}$*, *IFT$_{Max}$*, a and b of said interfacial tension evolution model are determined as follows: i) assigning to said constants *IFT$_{Inf}$* *IFT$_{Min}$* and *IFT$_{Max}$* respectively the values of said measurements of said interfacial tension for said optimum salinity $s_0$, for said zero salinity and for said solubility limit of the salts, and ii) determining the values of said constants a and b by a regression method so as to adjust at least said measurements of said interfacial tension for said two salinity values bounding said optimum salinity.

3. Method according to either of the preceding claims, wherein step a) is carried out as follows: defining a plurality of salinity values for said saline aqueous solution comprising at least one surfactant, generating a plurality of emulsions each formed by a sample of said hydrocarbons and a sample of said saline aqueous solution comprising at least said surfactant for one of said values of said plurality of salinity values, and determining said value of said optimum salinity by setting up a phase diagram as a function of salinity.

4. Method according to one of the preceding claims, wherein said interfacial tension is measured using the rotating drop method.

5. Method according to one of the preceding claims, wherein said recovery scheme comprises at least one site for at least one injection well and/or at least one production well, and wherein said wells of said site are drilled by providing them with production infrastructures.

6. Use of the method according to one of the preceding claims, for decontamination of said underground formation.

7. Use of the method according to one of Claims 1 to 5, for exploitation of said hydrocarbons from said underground formation.

[Fig 1]

[Fig 2]

## RÉFÉRENCES CITÉES DANS LA DESCRIPTION

**Documents brevets cités dans la description**

- FR 2001859

**Littérature non-brevet citée dans la description**

- **PREUX, I. MALINOUSKAYA ; Q.L.NGUYEN ; E. FLAURAUD ; S. AYACHE.** Reservoir-Simulation Model with Surfactant Flooding Including Salinity and Thermal Effect, Using Laboratory Experiments. *SPE Réservoir Characterisation and Simulation Conference and Exhibition,* 17 Septembre 2019
- **HUH.** Interfacial tensions and solubilizing ability of a microemulsion phase that coexists with oil and brine. Exxon production Research Company, 1979, 19

- **VONNEGUT, B.** Rotating bubble method for the détermination of surface and interfacial tensions. *Rev. Sci. Instr.,* 1942, vol. 13, 6-16
- **LERAY, S ; DOUARCHE, F. ; TABARY, R. ; PEYSSON, Y. ; MOREAU, P. ; PREUX, C.** Multi-objective assisted inversion of chemical EOR corefloods for improving the prédictive capacity of numerical models. *Journal of Petroleum Science and Engineering,* 2016, vol. 146, 1101-1115, https://doi.org/10.1016/j.petrol.2016.08.015